(19) Europäisches Patentamt
European Patent Office
Office européen des brevets

(11) **EP 4 764 687 A1**

(12) **EUROPEAN PATENT APPLICATION**

(43) Date of publication:
**24.06.2026 Bulletin 2026/26**

(21) Application number: **24307173.5**

(22) Date of filing: **18.12.2024**

(51) International Patent Classification (IPC):
***G02F 1/1503*** *(2019.01)* ***G02F 1/1514*** *(2019.01)*

(52) Cooperative Patent Classification (CPC):
**G02F 1/1503; G02F 1/1514;** G02F 2001/15145

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Essilor International**
**94220 Charenton-Le-Pont (FR)**

(72) Inventors:
- **ARCHAMBEAU, Samuel**
  **31300 Toulouse (FR)**
- **HEBRARD, Elise**
  **31130 Balma (FR)**

(74) Representative: **Plasseraud IP**
**104 Rue de Richelieu**
**CS92104**
**75080 Paris Cedex 02 (FR)**

(54) **ELECTROCHROMIC AND SWITCHABLE MIRROR LENSES**

(57) The present invention provides a switchable mirror device that may achieve three states SO, S1 and S2 with one single electrochemicaol cell, wherein the device has a lower transmission in state S1 than in state S0 without substantially increasing the reflectivity of the device, which means that the transition from S0 to S1 corresponds essentially to a change of color of the device without the device taking the appearance of a mirror to an outside viewer, and wherein in S2, a mirror layer is reversibly deposited, and the device will have a mirror appearance.

EP 4 764 687 A1

## Description

### Technical field

This disclosure belongs to the field of electrochromic devices and switchable mirror devices. Said device may be an optical lens and more particularly an ophthalmic lens.

### Background art

Electrochromic devices such as electrochromic lenses are known (see e.g. document WO2022129013A1).

Various switchable mirror devices have also been disclosed. In particular, in document US20070195398A1 a mirror is obtained by reversible electrodeposition of a silver layer, which reflects the light. The electrodeposition devices disclosed in US20070195398A1 all have only two states: ON or OFF.

In document US20070195398, it is suggested to integrate the switchable mirror in devices such as rear-view mirrors for vehicles; windows for the exterior of a building, home or vehicle; skylights for buildings including tubular light filters; windows in office or room partitions; display devices; and variable reflectors.

US20070195398A1 also describes a device comprising a switchable mirror cell and an electrochromic cell that can be used as a rear-view mirror for a vehicle. In this device, the electrochromic cell and the switchable mirror cell are built independently and must be combined in the complete device. In other words, the electrochromic and switchable mirror device of US20070195398A1 comprises two electrochemical cells: one able to act as a switchable mirror and one able to act as an electrochromic cell.

### Summary

It has been found that providing an electrochromic and switchable mirror device, wherein one single multifunctional electrochemical cell is able to provide several mirror and/or electrochromic functionalities would be advantageous compared to a device such as in US20070195398A1 where the two functions are performed by two distinct electrochemical cells.

For example, several mirror and/or electrochromic functionalities can be provided by one single electrochemical cell when said cell can be set in multiple excited states providing different levels of color and/or reflectivity. An excited state is defined as a state where energy is applied to the electrochemical cell, as opposed to the resting state when no energy is applied.

An example of a single bifunctional electrochemical cell according to the present disclosure would be a cell able to act as an electrochromic device (it can change color without forming a mirror at the same time) or as a switchable mirror (a mirror functionality can be added). Indeed, it has been found that when in a certain range of tensions is applied to an electrochemical cell for a switchable mirror device, further comprising an electrochromic compound, it was possible to modify the color of the device without having a noticeable change in the reflectance for the device. In some embodiments, said single electrochemical cell comprised in the device of the present disclosure is further able to provide the mirror functionality in two different colors thus providing three functionalities within a single electrochemical cell.

Such multifunctional electrochemical cells can be more easily integrated in a device, since, compared to multiple cells, it is less bulky, requires less circuitry, consumes less energy, and comprises less interfaces whose optical properties must be controlled. In particular, a multifunctional electrochemical cell can more easily be integrated in an ophthalmic lens, where the transparency and bulkiness requirements are especially high.

The present disclosure thus provides such a device comprising a multifunctional electrochemical cell.

### Description

The present disclosure provides the following items:

1. Item 1: A device comprising a first face, a second face, and an electrochemical cell, said electrochemical cell comprising a shell defining a chamber, said chamber comprising an electroactive composition, wherein, there is an optical path P1P2 that successively:

   - crosses the first face of the device at a point P1,
   - crosses a first part of the shell,
   - crosses a second part of the shell, and
   - crosses the second face of the device at a point P2;

wherein a first electrode comprises the first part of the shell and a second electrode comprises the second part of the shell,
said device further comprising means to apply a tension between the first and the second electrodes, said means being configured to be able to maintain the electroactive composition in at least three different states S0, S1 and S2;
wherein:

- In S0, no electric energy is applied to the electrochemical cell, the electroactive composition comprises an electrochromic compound E and a metal cation $M^{n+}$ dissolved in a solvent, and the device has:

  ◦ a reflectance Rv0 measured at either P1 or P2, whichever is on the side opposite to the electrode where E is oxidized in S1,
  ◦ a reflectance Rv0' measured at either P1 or P2, whichever is not where Rv0 is measured, and
  ◦ a transmittance Tv0;

- In S1, an electric tension U1 is applied such that at least a part of compound E present in S0 is oxidized in a compound E* such that:

  ◦ the luminous reflectance of the device measured at either P1 or P2, whichever is on the side opposite to the electrode where E is oxidized, is Rv1 ≤ Rv0 + 3%, and
  ◦ the luminous transmittance of the device measured along optical path P1P2 is Tv1 ≤ Tv0 - 30%; and

- In S2, an electric tension U2, such that |U2| > |U1|, is applied such that at least a part of compound E present in S0 is oxidized in a compound E* and at least a part of $M^{n+}$ present in S0 is reduced and forms a mirror layer MA on either the first electrode or the second electrode and covering the first part of the shell or the second part of the shell, respectively, such that:

  o the reflectance of the device measured at either P1 or P2, whichever is on the side opposite to the electrode where E is oxidized, is Rv2 ≥ Rv0 + 5%, and
  o the transmittance of the device measured along optical path P1P2 is Tv2 ≤ Tv0 - 40%.

Such a device has a lower transmission in state S1 than in state S0 without substantially increasing the reflectivity of the device. This means that the transition from S0 to S1 corresponds essentially to a change of color of the device without the device taking the appearance of a mirror to an outside viewer. In S2 on the other hand, a mirror layer is deposited, and the device will have a mirror appearance.
In S2, looking at the device from the face of the device corresponding to the part of the shell where the mirror layer is deposited, the color of the device will be that of the metal constituting the mirror layer. Looking at the device from the other face of the device, the color of the device will also be influenced by the color of E*.
By contrast, in US20070195398A1, only two states are explored: one in which a bright metallic (silver) film (i.e. a mirror) is obtained and one in which no energy is applied and in which the metallic film has been redissolved. It was not contemplated in US20070195398A1 that it was possible, at intermediate applied energies, to obtain a significant color change thanks to an anodic electrochromic compound without having a mirror-like effect.
It is the merit of the inventors to have found that it was possible to maintain a colored state without forming a mirror at intermediate applied energies and to have built a device properly wired to allow the operator of the device to apply those intermediate energies.
This item covers two possibilities: in S2, either $M^{n+}$ is reduced at the electrode where E was oxidized in S1, which implies a change of the polarity of the electrodes between S1 and S2, or it is oxidized at the other electrode, which implies that the polarity of the electrodes stays the same between S1 or S2. In any case, in S2, E is oxidized at one electrode and $M^{n+}$ is reduced at the other.
It should be understood that $M^{n+}$ and E do not react with each other spontaneously, which indicates that the reduction potential of E* is higher than that of $M^{n+}$ in the composition present in the cell.
Tv, the transmittance of the device, is as defined by ISO 13666:1998:

$$Tv = 100 \times \frac{\int_{380\,nm}^{780\,nm} \tau(\lambda) \cdot V(\lambda) \cdot S_{D65}(\lambda) \cdot d\lambda}{\int_{380\,nm}^{780\,nm} V(\lambda) \cdot S_{D65}(\lambda) \cdot d\lambda} \%$$

and Rv, the total reflectance of the device is as defined by ISO 12311:2013:

$$Rv = 100 \times \frac{\int_{380\,nm}^{780\,nm} \rho(\lambda) \cdot V(\lambda) \cdot S_{D65}(\lambda) \cdot d\lambda}{\int_{380\,nm}^{780\,nm} V(\lambda) \cdot S_{D65}(\lambda) \cdot d\lambda} \%$$

where:

$\lambda$ is the wavelength in nanometers,
$\tau(\lambda)$ is the spectral transmittance of the device at the wavelength $\lambda$,
$\rho(\lambda)$ is the spectral reflectance of the device at the point of measurement at the wavelength $\lambda$, it takes into account all the reflections, which happen at all the interfaces of the device and which are collected by the integration sphere,
$V(\lambda)$ is the relative sensitivity of the human eye such as defined in ISO 11664-1,
$S_{D65}(\lambda)$ is the spectral power distribution of CIE standard illuminant D65, such as defined in ISO 11664-2.

The transmittance and reflectance of the device are measured with a spectrophotometer (for example a Lambda 1050 by Perkin Elmer). For the reflectance, an integration sphere mounted in the spectrophotometer is used and the angle is 8°. The calibration of the spectrophotometer is done without the switchable mirror device so that the total transmittance and reflectance of the device are measured.
According to this item, Tv0 must be higher than 60% and Rv0 is below 95%.
It should be understood that the faces of the device are the outside surfaces of the device. They can be seen by an outside observer looking at the device.
Since there is an optical path that successively crosses the first face of the device, crosses a first part of the shell, crosses a second part of the shell, and crosses the second face of the device, it means that light can pass through the device by following said optical path and that the device is not opaque on this path.
Thus at least the parts of the electrodes comprising the first part of the shell or the second part of the shell are transparent.
The shell need not be in one piece. It can comprise e.g. two walls separated by a sealing member, in which case, the inner surface of the first and second walls can define the inner surfaces of the first and second parts of the shell respectively.
2. Item 2: The device of item 1, wherein said means to apply a tension are configured to be able to maintain the electroactive composition in a fourth state S3, wherein an electric tension U3, such that $|U3| > |U1|$, is applied such that at least a part of compound E present in S0 is oxidized in a compound E* and at least a part of $M^{n+}$ present in S0 is reduced and forms a mirror layer MB on the first electrode or the second electrode, whichever is not the one on which MA is formed on in S2, such that:

- the reflectance of the device measured at either P1 or P2, whichever is on the side opposite to the electrode where E is $Rv3 \geq Rv0' + 5\%$, and
- the transmittance of the device measured along optical path P1P2 is $Tv3 \leq Tv0-40\%$.

According to this embodiment, it is possible to produce a mirror layer on any one of the two faces of the device. Thus the same observer looking at the same face of the device can see four qualitatively different states of the device: a resting state, a state where no mirror is formed but the color is changed compared to the resting state, a state where the device appears to have the metallic color of the mirror layer and a state where the device has a mirror appearance but its color results from both the color of C* and of the mirror layer.
This implies that the device is built to allow the operator to reverse the polarity of the electrodes.

3. Item 3: The device of item 1 or 2, wherein

in S 1, $Rv1 \leq Rv0 + 3\%$ and $Tv1 \leq Tv0 - 50\%$,
in S2, $Rv2 \geq Rv0 + 5\%$ and $Tv2 \leq Tv0 - 60\%$, and
where applicable, in S3, $Rv3 \geq Rv0' + 5\%$ and $Tv3 \leq Tv0 - 60\%$.

4. Item 4: The device of item 3, wherein

in S1, $Rv1 \leq Rv0 + 2\%$ and $Tv1 \leq Tv0 - 60\%$,
in S2, $Rv2 \geq Rv0 + 6\%$ and $Tv2 \leq Tv0 - 70\%$, and
where applicable, in S3, $Rv3 \geq Rv0' + 6\%$ and $Tv3 \leq Tv0 - 70\%$.

5. Item 5: The device of any one of items 1 to 4, wherein the first and second electrodes are devoid of a platinum layer

acting as a nucleation layer, preferably devoid of a nucleation layer.

As defined herein a nucleation layer is a very thin (less than 10 nm) layer of a metal different from the metal M that at least partially covers the transparent conductive material of the electrode facing the inside of the chamber and reduces the energetical need for deposition of the mirror layer thereon. It is made of a very thin (less than 10 nm) layer of a metal such as gold, platinum, ruthenium, rhodium, palladium, chromium, nickel, tantalum. The layer must be thin otherwise the metal renders the electrode opaque.

A nucleation layer made of platinum is described in US20070195398A1, where nucleation layers are presented as essential.

However, for the present invention, the device is preferably devoid of a nucleation layer. Without wishing to be bound by theory, it is supposed that the absence of a nucleation layer favors state S1 as it will delay the formation of a mirror layer.

6. Item 6: The device of any one of items 1 to 5, wherein the device comprises an optical lens, preferably an ophthalmic lens.

As herein defined, an ophthalmic lens is a lens which is designed to be mounted on a frame that can be worn by a wearer in such a way that it places the lens in front of the eye of the wearer. An ophthalmic lens can be used to protect the eye of the wearer or modify his vision (correction of the sight, protection from certain wavelengths, augmented reality, virtual reality, etc.). For example, ophthalmic lenses can be used in visors (such as helmet visors), monocles, or in eyeglasses (including sunglasses, goggles and safety glasses). As defined herein, contact lenses are not ophthalmic lenses. Ophthalmic lenses can be uncorrective ophthalmic lenses (also called plano or afocal lenses) or corrective ophthalmic lenses. A corrective lens may be a unifocal, a bifocal, a trifocal or a progressive lens. As defined herein, ophthalmic lenses can be finished lenses or semi-finished lenses. A semi-finished lens undergoes various treatment steps such as surfacing, coloring, coating and edging before being finally included in eyeglasses or in a monocle. A finished lens is ready to be included in the frame (eyeglasses, visors, a monocle, etc.)

7. Item 7: The device of item 6, wherein the device further comprises a frame, which the ophthalmic lens is mounted, said frame being configured to be worn by a wearer in such a way that it places the lens in front of the eye of the wearer.
8. Item 8: The device of item 6 or 7, wherein the first face of the device of the invention is the main face of the ophthalmic lens farthest from the eye of the wearer and the second face of the device is the main face of the ophthalmic lens closest to the eye of the wearer.
9. Item 9: The device of any one of items 1 to 8, wherein the mirror layer MA is formed on the first electrode.
10. Item 10: The device of any one of items 1 to 9, wherein the device comprises a first transparent substrate between the first face of the device and the first part of the shell.
11. Item 11: The device of item 10, wherein the first transparent substrate is tinted.
12. Item 12: The device of any one of items 1 to 11, wherein the device comprises a second transparent substrate between the second face of the device and the second part of the shell.

The use of the expression "a second transparent substrate", does not imply that there is necessarily a first transparent substrate in the device.

13. Item 13: The device of item 12, wherein the second transparent substrate is tinted.

For the wearer of the ophthalmic lens, the transmitted light is the same whether the mirror layer is applied on the front face of the electrochemical cell or on the rear face of the electrochemical cell. Thus, when the state of the device is changed from S2 to S3, the device of the invention allows the wearer to change its appearance for an outside viewer without decreasing the visual comfort of the wearer.

14. Item 14: The device of any one of items 1 to 13, wherein the first electrode is made of a transparent conductive oxide.
15. Item 15: The device of item 14, wherein the first electrode is made of indium tin oxide ("ITO"), fluorine-doped tin oxide (FTO).
16. Item 16: The device of any one of items 1 to 15, wherein the second electrode is made of a transparent conductive oxide.
17. Item 17: The device of item 16, wherein the second electrode is made of ITO or FTO.
18. Item 18: The device of any one of items 1 to 17, wherein the shell comprises two main faces and a side wall, said two main faces of the shell comprising the first and second part of the shell and comprising at least a part of the first and the second electrode, and a height of the side wall imposing a distance between the two main faces of the shell, said height being comprised between 10 $\mu$m and 400 $\mu$m, preferably between 20 and 250 $\mu$m, and more preferably between 100 and 200 $\mu$m.
19. Item 19: The device of item 18, wherein the first and second main faces of the shell consist of the first and second

electrode, respectively.

20. Item 20: The device of any one of items 1 to 19, wherein the solvent comprises a solvent selected from the list consisting of propylene carbonate, γ-butyrolactone, dimethylsulfoxide, an ionic liquid, and mixtures thereof.

Propylene carbonate is a particularly advantageous solvent. It is stable, in particular to reduction or oxidation, its polar nature makes it a relatively good solvent for ions, it has a low melting point of about -50°C, which is useful for devices used in cold conditions such as ski goggles, and it has a high melting point of about 240°C, which is useful since switchable mirrors often necessitate the use of vacuum for their manufacture. γ-Butyrolactone has properties similar to propylene carbonate. Propylene carbonate and γ-butyrolactone are thus especially suitable solvents for the composition of the invention.

21. Item 21: the device of item 20, wherein the solvent comprises propylene carbonate, γ-butyrolactone or a combination thereof, preferably the solvent comprises at least 70% w/w of propylene carbonate, γ-butyrolactone or a combination thereof relative to the total mass of the solvent in the composition, more preferably the solvent comprises at least 90% w/w of propylene carbonate, γ-butyrolactone or a combination thereof relative to the total mass of the solvent in the composition, even more preferably the solvent is propylene carbonate, γ-butyrolactone or a combination thereof.

22. Item 22: the device of item 21, wherein the solvent comprises propylene carbonate, preferably the solvent comprises at least 70% w/w of propylene carbonate relative to the total mass of the solvent in the composition, more preferably the solvent comprises at least 90% w/w of propylene carbonate relative to the total mass of the solvent in the composition, even more preferably the solvent is propylene carbonate.

23. Item 23: The device of any one of items 1 to 22, wherein $M^{n+}$ is chosen from the list consisting of $Cu^{2+}$, $Ag^{+}$, $Sn^{2+}$, $Zn^{2+}$, $Bi^{3+}$, $Al^{3+}$, $Ni^{2+}$, $Pb^{2+}$, and mixtures thereof, preferably $M^{n+}$ is $Cu^{2+}$ or a mixture of $Cu^{2+}$ and $Sn^{2+}$.

24. Item 24: The device of any one of items 1 to 23, wherein the electroactive composition further comprises a ligand L.

For switchable mirror devices, the quality of the mirror layer and the reversibility of the deposition are key.

The use of complexing agents (i.e. ligands), such as pyridines; bipyridines, such as 2,2'-bipyridine; 1,10-phenathrolines; imidazoles; crown ethers; polyethylene glycol; thiourea; halides, including chloride, iodide, and bromide; and triphenylphosphine or other phosphine ligand, for improving the quality of a mirror layer in a switchable mirror device is known, e.g. from US20070195398A1.

25. Item 25: the device of item 24, wherein the ligand L comprises the following moiety I:

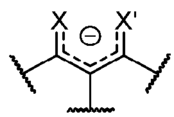

wherein X and X' are independently selected from O, and

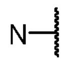.

The above formula is one possible representation of moiety I. Moiety I could also be represented by the following formulas:

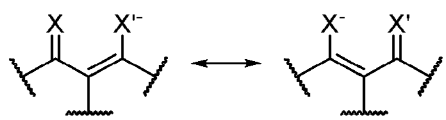

The ligand L comprises ligands such as acac, NacNac and analogous ligands with one oxygen and one nitrogen. In the present disclosure we call the class of ligands comprising the moiety I: acac-type ligands.

In the electroactive composition of the invention, the ligand L is at least partly coordinated to the metal cations $M^{n+}$ comprised in the composition.

It has been found that not all ligands have the same performances in switchable mirror devices as, for example, using citrate ligands did not give results as satisfying as those obtained with acac-type ligands. In document US20070195398A1, acac-type ligands are not mentioned. It has been found that acac-type ligands provide a practical alternative to the ligands mentioned in US20070195398A1. Notably, contrary to the bipyridine ligands disclosed in

US20070195398A1, acac-type ligands are soluble in propylene carbonate.

The switchable mirror devices obtained with acac-type ligands have a quality compatible for their use as ophthalmic lenses. In such ophthalmic lenses, the deposition of the mirror layer provides an esthetically pleasing appearance and at the same time protects the eye from excessive light. Moreover, in the same state where the mirror layer provides protection and a pleasing appearance, the mirror layer remains semitransparent, such that the wearer of the ophthalmic lens has a good vision when looking through the mirror layer.

26. Item 26: the device of item 25, wherein the ligand L comprises a fluorinated, preferably polyfluorinated, more preferably perfluorinated alkyl chain.

It has been observed that the reversibility of the deposition of a mirror layer was improved when the ligand L comprised fluorinated, preferably polyfluorinated, more preferably perfluorinated alkyl chains.

Without wishing to be bound by theory, it is presumed that interactions between moiety I and the mirror layer that is deposited leads to adsorption of the ligand L on the mirror layer. The adsorption of the ligand L would hinder the redissolution of the mirror layer. In principle, the redissolution of the mirror layer is caused by the spontaneous reaction between E* and the metal of the mirror layer to give E and $M^{n+}$. It is presumed that when the ligand L comprises electron withdrawing groups such as fluorinated alkyl chains, its adsorption on the mirror layer is weaker and the redissolution of the mirror layer therefore easier.

27. Item 27: the device of item 25 or 26, wherein L comprises at most 2 moieties I, preferably 1 moiety I.

28. Item 28: the device of any one of items 25 to 27, wherein moiety I has the following structure:

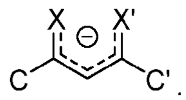

It should be understood that C and C' represent carbon atoms, which may be sp2 or sp3.

29. Item 27: the device of item 25 or 26, wherein at least one, preferably both of C and C' are comprised in alkyl chains, preferably fluorinated, more preferably polyfluorinated, even more preferably perfluorinated alkyl chains.

30. Item 30: the device of any one of items 25 to 29, wherein at least one of X and X', preferably both, are O.

31. Item 31: the device of item 30, wherein ligand L is selected from acetylacetonate (acac), trifluoroacetylacetonate (tfacac), and hexafluoroacetylacetonate (hfacac), preferably is hexafluoroacetylacetonate. Acac is

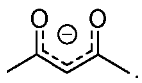

Tfacac is

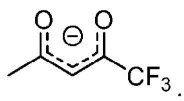

Hfacac is

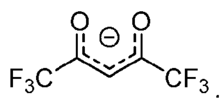

32. Item 32: the device of any one of items 25 to 31, wherein the electroactive composition comprises a molar amount $x_T$ of metal cations, which are as oxidizing as $M^{n+}$ or less, said metal cations having on average a positive charge $n_T$, wherein the molar amount of moiety I in the electroactive composition is $x_I$, and wherein $x_I/x_T$ is lower than $0.95 \times n_T$, such as of 0.1 to $0.95 \times n_T$, for example of 0.15 to $0.95 \times n_T$, preferably lower than $0.85 \times n_T$, such as of 0.1 to $0.85 \times n_T$, for example of 0.15 to $0.85 \times n_T$.

When $M^{n+}$ is a mixture of cations, it should be understood that this item concerns metal cations that are as oxidizing as or less oxidizing the least oxidizing of the metal cations in the mixture represented by $M^{n+}$.

It has been observed that an excess of metal cations, which are not necessarily reduced in the mirror layer when the least oxidizing of the metal cations in the mixture represented by $M^{n+}$ starts being reduced, relative to an amount of said

cations able to achieve charge balance with the moieties I improved the reversibility of the mirror layers deposited. Without wishing to be bound by theory, it is presumed that moiety I adsorbs on the mirror layer that is deposited and hinders the redissolution of the layer. In principle, the redissolution of the mirror layer is caused by the spontaneous reaction between E* and the metal of the mirror layer to give E and $M^{n+}$. Thus, it is presumed that an excess of metal cations able to coordinate to the moieties I that are adsorbed on the mirror layer cause the desorption of said moieties I and makes it so that the mirror layer reacts more easily with E*.

The average positive charge $n_T$ is a molar average. For a collection of cations $M_1^{n1+}$, $M_2^{n2+}$, ..., $M_i^{ni+}$, ..., $M_p^{np+}$, in respective amounts $x_1$, $x_2$, ..., $x_i$, ..., $x_p$; $n_T$ is:

$$n_T = \frac{\sum_{i=1}^{p} n_i x_i}{\sum_{i=1}^{p} x_i}$$

Preferably, $x_I/x_T$ is lower than $0.85 \times n_T$, for improving the kinetics of the dissolution of the mirror layer.

33. Item 33: the device of any one of items 25 to 32, wherein any anion in the electrochemical composition other than the ligand L, when the ligand L is anionic, is a non-chelating anion, preferably is a non-chelating anion such that a fully protonated form of said anion is a strong acid, preferably wherein said anion is a non-chelating anion such that the fully protonated form of said anion is a superacid.

Any acid with a pKa value which is less than about -2 is classed as a strong acid. A superacid is an acid with an acidity greater than that of 100% pure sulfuric acid ($H_2SO_4$). For example, perchloric acid and triflic acid are superacids. All superacids are also strong acids.

Examples of anions, whose protonated form is superacid comprise the following anions: trifluoromethanesulfonate, perchlorate, tetrafluoroborate, hexafluorophoshate, and bistriflimide.

34. Item 34: the device of item 32 or 33, wherein the molar amount of moiety I in the electrochemical composition is $x_I$, the molar amount of $M^{n+}$ or, where applicable, the least oxidizing of the metal cations in the mixture represented by $M^{n+}$, in the electrochemical composition is $x_M$, and $x_I/x_M$ is lower than $0.95 \times n$, such as of 0.5 to $0.95 \times n$, for example of 0.7 to $0.95 \times n$, preferably lower than $0.85 \times n$, such as of 0.5 to $0.85 \times n$, for example of 0.7 to $0.85 \times n$.

When $M^{n+}$ is a mixture of cations, it should be understood that n in this item represents the oxidation number of the least oxidizing of the metal cations in the mixture represented by $M^{n+}$.

According to this item the preparation of the composition of the invention is simplified as it is can be obtained by adding two different salts of the metal cation $M^{n+}$ or of the least oxidizing of the metal cations in the mixture represented by $M^{n+}$ to the composition: one salt with the ligand L as the only counter anion and one salt of the metal cation $M^{n+}$ with another anion.

35. Item 35: the device of any one of items 32 to 34, wherein the electroactive composition further comprises a metal cation $M_s^{ns+}$ less oxidizing than $M^{n+}$, preferably $M_s^{ns+}$ is an alkali metal cation, more preferably $Li^+$.

Here, when $M^{n+}$ is a mixture of cations, "less oxidizing than $M^{n+}$" means less oxidizing than the least oxidizing of the metal cations in the mixture represented by $M^{n+}$.

According to this item the preparation of the composition of the invention is simplified as it is possible to use a salt of $M_s^{ns+}$ as the supporting electrolyte. A supporting electrolyte is added to the composition when the other compounds present in the composition do not provide a satisfactory ionic conductivity, for example when there are not enough ionic species in the composition. This can be the case either in the resting state or when electric energy is applied to the composition to form the mirror layer and oxidize E to E*. Supporting electrolyte are advantageously a lithium salt but may be other metallic salts or other salts such as ionic liquids or ammonium (including alkylammonioum and tetraalkylammonium salts).

36. Item 36: the device of item 35, wherein $x_s$, the molar amount of $M_s^{ns+}$ in the electroactive composition is such that $x_I/x_s$ is below ns, such as comprised between ns/10 and $n_s$, preferably below $n_s/2$, such as comprised between $n_s/10$ and $n_s/2$, preferably below $n_s/3$, such as comprised between $n_s/10$ and $n_s/3$.

The principal limit on how low the ratio $x_I/x_s$ can be is set by the solubility of the cation $M_s^{ns+}$ in the composition.

37. Item 37: the device of any one of items 1 to 36, wherein E comprises a moiety II having the following formula:

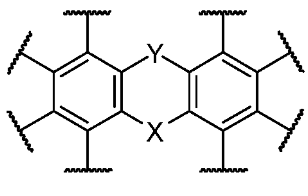

Wherein X and Y are independently selected from the list consisting of O, S, and

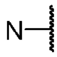,

with the proviso that both X and Y cannot be O, preferably X is S and Y is

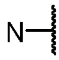.

Advantageously, phenothiazine compounds have a relatively high reduction potential, which means that they do not easily spontaneously react with metal cations, opening up the choice of metal cations.

The electrochemical composition may further comprise supporting electrolyte to enhance ionic conduction in the cell and other additives, such as polymeric additives, which improve the energetic performance of the cell a disclosed in document EP3923064A1.

38. Item 38: A method of use of the device according to any one of items 1 to 37, wherein the state of the device is maintained in states S0, S1 and S2 at different periods in time.
39. Item 39: the method of item 38, wherein maintaining state S1 comprises the following steps:

    ◦ providing the device in the state S0
    ◦ imposing a short circuit between the electrodes, and
    ◦ increasing the tension between the electrodes from said short circuit in a monotonous manner to reach U1 and maintaining the tension there.

40. Item 40: the method of item 38 or 39, wherein the state of the device is maintained in states S0, S1, S2 and S3 at different periods in time.

**Examples**

Electrochemical cells were made of two substantially flat substrates coated with ITO facing each other and separated by a side wall having a thickness of 150 μm. The ITO electrodes were connected to direct current power supply. The gap between the ITO electrodes was filled under vacuum with the following formulations:

| Formulation | $M^{n+}$ source (30 mM) | EC compound (100 mM) | Supporting electrolyte | Additive 1 | Additive 2 | Solvent |
|---|---|---|---|---|---|---|
| **F1** | $Cu(Hfacac)_2$ | Methylphenothiazine | TBAP (250 mM) | $CuTf_2$ (10 mM) | Polyvinyl acetate | Propylene carbonate |
| **F2** | $Cu(Hfacac)_2$ | Methylphenothiazine | LiTf (100 mM) | - | Polyvinyl acetate | Propylene carbonate |
| Hfacac: hexafluoroacetylacetonate; TBAP: tetrabutylammonium perchlorate; Tf: trifluoromethanesulfonate. | | | | | | |

Polyvinyl acetate is present in a concentration of 10% w/w compared to the total mass of the solvent and the polyvinyl acetate.

Rv and Tv are measured with a Perkin Elmer spectrophotometer (Lambda 1050) in transmission and in reflexion mode. Concerning the reflexion, the measure is done with an angle of 8 degree in an integration sphere mounted in the spectrophotometer and at the face of the cell corresponding to the cathode.

For formulation **F1**:

The baseline (clear state) has a Tv of 85% and a Rv of 10%.

When activated at 0.9V, the device had a Tv of 18% and a Rv of 12.8%.

When activated at 1.3V, the device had a Tv of 4.5% and a Rv of 18.7%.

When activated at 0.9V, the lens was colored but did not reflect light like a mirror (see Fig. 1, left).

When activated at 1.3V, the lens reflected light like a mirror (see Fig. 1, right). The color that can be seen in Fig. 1 on the right is that of the copper layer which was deposited on the front of the cell.

For formulation **F2:**

| Tension (V) | Transmission Tv (%) | Reflexion Rv (%) |
|---|---|---|
| 0 | 85.2 | 10.3 |
| 0.7 | 70.3 | 9.1 |
| 0.8 | 48.7 | 8.6 |
| 0.802 | 34.2 | 8.6 |
| 0.805 | 32.6 | 9.0 |
| 0.810 | 29.9 | 9.8 |
| 0.87 | 15.9 | 11.1 |
| 1.15 | 7 | 15.8* |
| 1.3 | 7.9 | 18.8** |
| *: at this voltage, the mirror looks diffusive with a low specular reflexion.<br>**: at this voltage, a mirror with a high specular reflexion is obtained. The device can be maintained in this state even at a lower applied voltage (e.g. 0.6V) as long as a pulse of higher voltage is first applied (e.g. 70 s at 1.3 V). | | |

It can be seen that:

- At voltages below a certain point around 0.8V, Rv does not substantially increase while the Tv substantially decreases, which corresponds to a first behavior of the cell as a "pure" electrochromic device. The slight initial decrease in Rv is due to the fact that a substantial part of the reflected light is reflected at the anode and behind and is absorbed by the colored state of the EC compound.
- At higher voltages Rv substantially increases however initially a mirror with low specular reflexion is obtained and voltages of about 1.3V are needed in order to obtain good specular reflexion equivalent to that of typical mirrored sunglasses (typical mirrored sunglasses have a Rv of 19%).

## Claims

**1.** A device comprising a first face, a second face, and an electrochemical cell, said electrochemical cell comprising a shell defining a chamber, said chamber comprising an electroactive composition, wherein, there is an optical path P1P2 that successively:

- crosses the first face of the device at a point P1,
- crosses a first part of the shell,
- crosses a second part of the shell, and
- crosses the second face of the device at a point P2;

wherein a first electrode comprises the first part of the shell and a second electrode comprises the second part of the shell,

said device further comprising means to apply a tension between the first and the second electrodes, said means being configured to be able to maintain the electroactive composition in at least three different states S0, S1 and S2;

wherein:

- In S0, no electric energy is applied to the electrochemical cell, the electroactive composition comprises an electrochromic compound E and a metal cation $M^{n+}$ dissolved in a solvent, and the device has:

o a reflectance Rv0 measured at either P1 or P2, whichever is on the side opposite to the electrode where E is oxidized in S1,
o a reflectance Rv0’ measured at either P1 or P2, whichever is not where Rv0 is measured, and
o a transmittance Tv0;

- In S1, an electric tension U1 is applied such that at least a part of compound E present in S0 is oxidized in a compound E* such that:

o the luminous reflectance of the device measured at either P1 or P2, whichever is on the side opposite to the electrode where E is oxidized, is $Rv1 \leq Rv0 + 3\%$, and
o the luminous transmittance of the device measured along optical path P1P2 is $Tv1 \leq Tv0 - 30\%$; and

- In S2, an electric tension U2, such that $|U2| > |U1|$, is applied such that at least a part of compound E present in S0 is oxidized in a compound E* and at least a part of $M^{n+}$ present in S0 is reduced and forms a mirror layer MA on either the first electrode or the second electrode and covering the first part of the shell or the second part of the shell, respectively, such that:

o the reflectance of the device measured at either P1 or P2, whichever is on the side opposite to the electrode where E is oxidized, is $Rv2 \geq Rv0 + 5\%$, and
o the transmittance of the device measured along optical path P1P2 is $Tv2 \leq Tv0 - 40\%$.

**2.** The device of claim 1, wherein said means to apply a tension are configured to be able to maintain the electroactive composition in a fourth state S3, wherein an electric tension U3, such that $|U3| > |U1|$, is applied such that at least a part of compound E present in S0 is oxidized in a compound E* and at least a part of $M^{n+}$ present in S0 is reduced and forms a mirror layer MB on the first electrode or the second electrode, whichever is not the one on which MA is formed on in S2, such that:

◦ the reflectance of the device measured at either P1 or P2, whichever is on the side opposite to the electrode where E is $Rv3 \geq Rv0' + 5\%$, and
◦ the transmittance of the device measured along optical path P1P2 is $Tv3 \leq Tv0 - 40\%$.

**3.** The device of claim 1 or 2, wherein

in S 1, $Rv1 \leq Rv0 + 3\%$ and $Tv1 \leq Tv0 - 50\%$,
in S2, $Rv2 \geq Rv0 + 5\%$ and $Tv2 \leq Tv0 - 60\%$, and
where applicable, in S3, $Rv3 \geq Rv0' + 5\%$ and $Tv3 \leq Tv0 - 60\%$.

**4.** The device of claim 3, wherein

in S1, $Rv1 \leq Rv0 + 2\%$ and $Tv1 \leq Tv0 - 60\%$,
in S2, $Rv2 \geq Rv0 + 6\%$ and $Tv2 \leq Tv0 - 70\%$, and
where applicable, in S3, $Rv3 \geq Rv0' + 6\%$ and $Tv3 \leq Tv0 - 70\%$.

**5.** The device of any one of claims 1 to 4, wherein the first and second electrodes are devoid of a platinum layer acting as a nucleation layer, preferably devoid of a nucleation layer.

**6.** The device of any one of claims 1 to 5, wherein the device comprises an optical lens, preferably an ophthalmic lens.

**7.** The device of claim 6, wherein the device further comprises a frame, which the ophthalmic lens is mounted, said frame being configured to be worn by a wearer in such a way that it places the lens in front of the eye of the wearer.

**8.** The device of claim 6 or 7, wherein the first face of the device of the invention is the main face of the ophthalmic lens farthest from the eye of the wearer and the second face of the device is the main face of the ophthalmic lens closest to the eye of the wearer and wherein the mirror layer MA is formed on the first electrode.

**9.** The device of any one of claims 1 to 8, wherein the device comprises a transparent substrate between the second face of the device and the second part of the shell and wherein the second transparent substrate is tinted.

**10.** The device of any one of claims 1 to 9, wherein $M^{n+}$ is chosen from the list consisting of $Cu^{2+}$, $Ag^{+}$, $Sn^{2+}$, $Zn^{2+}$, $Bi^{3+}$, $Al^{3+}$, $Ni^{2+}$, $Pb^{2+}$, and mixtures thereof, preferably $M^{n+}$ is $Cu^{2+}$ or a mixture of $Cu^{2+}$ and $Sn^{2+}$.

**11.** The device of any one of claims 1 to 10, wherein the solvent comprises propylene carbonate, γ-butyrolactone or a combination thereof, preferably the solvent comprises at least 70% w/w of propylene carbonate, γ-butyrolactone or a

combination thereof relative to the total mass of the solvent in the composition, more preferably the solvent comprises at least 90% w/w of propylene carbonate, γ-butyrolactone or a combination thereof relative to the total mass of the solvent in the composition, even more preferably the solvent is propylene carbonate, γ-butyrolactone or a combination thereof.

**12.** The device of any one of claims 1 to 11, wherein E comprises a moiety II having the following formula:

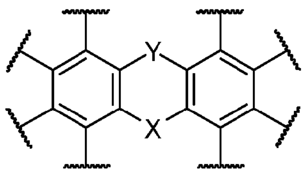

,

wherein X and Y are independently selected from the list consisting of O, S, and

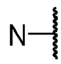

,

with the proviso that both X and Y cannot be O, preferably X is S and Y is

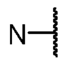

.

**13.** A method of use of the device according to any one of claims 1 to 12, wherein the state of the device is maintained in states S0, S1 and S2 at different periods in time.

**14.** The method of claim 13, wherein maintaining state S1 comprises the following steps:

- providing the device in the state S0
- imposing a short circuit between the electrodes, and
- increasing the tension between the electrodes from said short circuit in a monotonous manner to reach U1 and maintaining the tension there.

**15.** The method of claim 13 or 14, wherein the state of the device is maintained in states S0, S1, S2 and S3 at different periods in time.

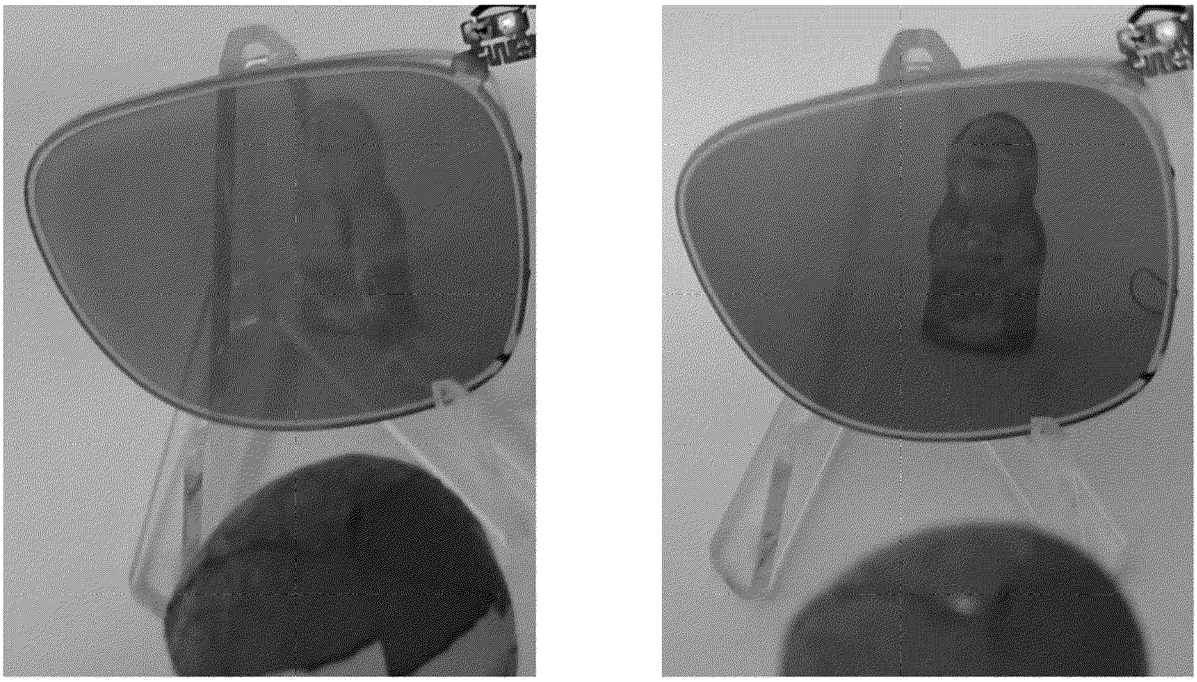

Fig. 1

Europäisches Patentamt
European Patent Office
Office européen des brevets

# EUROPEAN SEARCH REPORT

Application Number
EP 24 30 7173

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 2018 0077992 A (LG DISPLAY CO LTD [KR]) 9 July 2018 (2018-07-09) | 1,3-5, 9-11,13, 14 | INV. G02F1/1503 G02F1/1514 |
| Y | * figures 1-9 * * paragraph [0025] - paragraph [0147] * ----- | 2,6-8, 12,15 | |
| Y | US 6 400 491 B1 (TENCH D MORGAN [US] ET AL) 4 June 2002 (2002-06-04) * figures 2,3 * ----- | 2,15 | |
| Y | US 2023/185112 A1 (MEYNEN MATHIEU [FR] ET AL) 15 June 2023 (2023-06-15) * figures 1,2 * ----- | 6-8 | |
| Y | KR 2019 0068545 A (GENTEX CORP [US]) 18 June 2019 (2019-06-18) * paragraph [0005] - paragraph [0006] * ----- | 12 | |
| | | | TECHNICAL FIELDS SEARCHED (IPC) |
| | | | G02F |

The present search report has been drawn up for all claims

2

| Place of search | Date of completion of the search | Examiner |
|---|---|---|
| Munich | 2 June 2025 | Kentischer, Florian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 24 30 7173

This annex lists the patent family members relating to the patent documents cited in the above-mentioned European search report. The members are as contained in the European Patent Office EDP file on
The European Patent Office is in no way liable for these particulars which are merely given for the purpose of information.

02-06-2025

| Patent document cited in search report | Publication date | Patent family member(s) | Publication date |
|---|---|---|---|
| KR 20180077992 A | 09-07-2018 | NONE | |
| US 6400491 B1 | 04-06-2002 | CA 2416540 A1 | 24-01-2002 |
| | | EP 1301824 A2 | 16-04-2003 |
| | | JP 2004504628 A | 12-02-2004 |
| | | KR 20030040361 A | 22-05-2003 |
| | | US 6400491 B1 | 04-06-2002 |
| | | WO 0206884 A2 | 24-01-2002 |
| US 2023185112 A1 | 15-06-2023 | CN 116256902 A | 13-06-2023 |
| | | EP 4194935 A1 | 14-06-2023 |
| | | US 2023185112 A1 | 15-06-2023 |
| KR 20190068545 A | 18-06-2019 | CN 109906219 A | 18-06-2019 |
| | | EP 3526204 A1 | 21-08-2019 |
| | | JP 6824425 B2 | 03-02-2021 |
| | | JP 2020502588 A | 23-01-2020 |
| | | KR 20190068545 A | 18-06-2019 |
| | | US 2018105738 A1 | 19-04-2018 |
| | | WO 2018075533 A1 | 26-04-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2022129013 A1
- US 20070195398 A1
- US 20070195398 A
- EP 3923064 A1